# EUROPEAN PATENT APPLICATION

(11) **EP 2 889 762 A1**
(43) Date of publication of application: **01.07.2015**
(21) Application number: 13830836.6
(22) Date of filing: 19.08.2013
(51) Int. Cl.: G06F 9/44

(54) **TERMINAL USER INTERFACE MANAGEMENT METHOD AND TERMINAL**

(30) Priority: 21.08.2012 CN 201210298866
(71) Applicant: ZTE Corporation, Shenzhen, Guangdong 518057 (CN)
(72) Inventor: YANG, Wenjun, Shenzhen Guangdong 518057 (CN); ZHENG, Xingyou, Shenzhen Guangdong 518057 (CN)
(74) Representative: Huang, Chongguang
(86) International application number: PCT/CN2013/081797
(87) International publication number: WO 2014/029313

(57) **Abstract**

The present invention discloses a terminal user interface management method and a terminal, wherein, after a menu data packet is received, according to attribute information of each menu included in the menu data packet, it is to obtain a relationship list among menus of all levels; and then according to the relationship list, locate a menu of a corresponding level; and then construct a display page of the menu of the corresponding level and display the display page to a user. Obviously, the user interface management method provided in the present invention has a clear structure and a definite function, and is more convenient and concise compared with the existing user interface management method, thus greatly improving the satisfaction of the user experience.

## Description

### Technical Field

The present invention relates to the communication field, and in particular, to a terminal user interface management method and a terminal.

### Background of the Related Art

The intellectual network service is a mature technology of the telecommunication industry, and it can generate and realize the systems of various services fast, flexibly and effectively. The system can provide various business services for a telephone network, a packet switched data network, a narrowband Integrated Service Digital Network, a broadband Integrated Service Digital Network, a mobile communication network, etc., with good economic benefits and broad market prospect. For example, in numerous application services of the intellectual network, the user custom function or inquiry and charging function is the common business services.

In the intelligent network, by identifying the access request of the user, it is to transfer the requested service to different content service providers, and the content service provider authenticates the attribute of the user and the type of the service request to push different service data packets to the user. Those service data packets contain the service information of different levels, and the level relation of the services is required to be arranged, to present the services to the user according to the relation of the master catalogue and the sub-catalogue. When the user selects the master catalogue service, the intelligent network can return it to the user sub-catalogue service through internal processing, to realize the interaction with the user; while the modes for interacting with the user on the terminal are miscellaneous at present, and it is inconvenient for the user to use, and the satisfaction of the user experience is poor.

### Summary of the Invention

The main technical problem required to be solved with the present invention is to provide a terminal user interface management method and a terminal, for more conveniently and concisely managing the user interface, thus improving the satisfaction of the user experience.

In order to solve the above-mentioned technical problem, the present invention provides a terminal user interface management method, comprising:
receiving a menu data packet, wherein, the menu data packet comprises attribute information of each menu;
obtaining a relationship list among menus of all levels according to the attribute information of each menu;
locating a menu of a corresponding level according to the relationship list;
constructing a display page of the menu of the corresponding level; and
displaying the constructed display page.
In one embodiment of the present invention, the attribute information includes a menu subsidiary parameter;
obtaining the relationship list among menus of all levels according to the attribute information of each menu comprises:
   locating a previous-level menu of every menu according to the subsidiary parameter of every menu, and obtaining the relationship list among the menus of all levels.

In one embodiment of the present invention, constructing the display page of the menu of the corresponding level comprises:
obtaining a display page list according to the attribute information of all menus of the corresponding level, wherein, the display page list comprises initialization information of the display page; and
assembling a content of a current display page according to the initialization information.

In one embodiment of the present invention, the attribute information comprises a content of the menu; obtaining the initialization information contained in the display page list according to the obtained attribute information comprises: determining a number of the menus of every display page according to the content of every menu; and determining a display page where every menu is situated and an interior label of every menu in the relationship list; and
assembling the content of the current display page according to the obtained initialization information comprises: assembling a number of the menus contained in the current display page and the content of every menu according to the initialization information.

In one embodiment of the present invention, obtaining the initialization information contained in the display page list according to the obtained attribute information further comprises: according to a position of the current display page in the display page list, determining page-turning information on the current display page; and
assembling the content of the current display page according to the obtained initialization information further comprises: determining a page-turning content of the current display page according to the page-turning information.

In one embodiment of the present invention, displaying the constructed display page comprises:
converting the page-turning content and the interior label of every menu in the display page into a form selected by a user and displaying in the current display page.

In one embodiment of the present invention, after displaying the constructed display page, the method further comprises:
obtaining selection information input by the user;
if the selection information input by the user is an interior label of a certain menu on a corresponding display page, locating a next-level menu of the menu corresponding to the interior label according to the relationship list, and constructing a display page of the next-level menu; and
if the selection information input by the user is the page-turning information, then switching to the display page selected by the user according to the display page list, and assembling and displaying the content of the display page.

In one embodiment of the present invention, after receiving the menu data packet and before obtaining the relationship list among the menus of all levels according to the attribute information of each menu, the method further comprises: a step for detecting validity of the received menu data packet; if a detection result is valid, then obtaining the relationship list among the menus of all levels according to the attribute information of each menu.

The present invention further provides a terminal, comprising:
a data receiving module, configured to receive a menu data packet, wherein, the menu data packet comprises attribute information of each menu;
a menu classification module, configured to: obtain a relationship list among menus of all levels according to the attribute information of each menu contained in the menu data packet;
a location module, configured to: locate a menu of a corresponding level according to the relationship list;
a page construction module, configured to: construct a display page of the menu of the corresponding level located by the location module; and
a displaying module, configured to: display the display page constructed by the page construction module.

In one embodiment of the present invention, the page construction module comprises a page initialization sub-module and a page content assembly sub-module, wherein,
the page initialization sub-module is configured to: obtain a display page list according to the attribute information of all menus of the corresponding level, wherein, the display page list comprises initialization information of the display page; and
the page content assembly sub-module is configured to: assemble a content of a current display page according to the initialization information.

In one embodiment of the present invention, the attribute message comprises a content of the menu; the page initialization sub-module is configured to determine a number of the menus of every display page according to the content of every menu; and determine the display page where every menu is situated and an interior label of every menu in the relationship list; and determining page-turning information on the current display page according to a position of the current display page on the display page list; and
the page content assembly sub-module is configured to: assembling a number of the menus contained in the current display page and the content of every menu according to the initialization information; and determining a page-turning content of the current display page according to the page-turning information.

In one embodiment of the present invention, the displaying module comprises an output conversion sub-module, configured to: convert the page-turning content and the interior label of every menu in the display page into a form selected by a user and display in the current display page.

In one embodiment of the present invention, the terminal further comprises an information collection module and a display page location module; wherein,
the information collection module is configured to: obtain selection information input by the user;
the location module is further configured to: when the selection information input by the user is an interior label of a certain menu on a corresponding display page, locate a next-level menu of the menu corresponding to the interior label according to the relationship list; and
the display page location module is configured to: when the selection information input by the user is the page-turning information, switch to the display page selected by the user according to the display page list, and call the page content assembly sub-module to assemble the content of the display page.

In one embodiment of the present invention, the terminal further comprises a detection module, configured to: detect the menu data packet received by the data receiving module, judge validity of the menu data packet, and notify the menu classification module to obtain the relationship list among the menus of all levels according to the attribute information of each menu contained in the data packet when a detection result is valid.

With the terminal user interface management method and the terminal provided by the present invention, after a menu data packet is received, according to attribute information of each menu included in the menu data packet, it is to obtain a relationship list among menus of all levels; and then according to the relationship list, locate a menu of a corresponding level; and then construct a display page of the menu of the corresponding level and display the display page to a user. Obviously, the user interface management method provided in the present invention has a clear structure and a definite function, and is more convenient and concise compared with the existing user interface management method, thus greatly improving the satisfaction of the user experience.

### Brief Description of Drawings

FIG. 1 is a structure diagram of a terminal in an embodiment of the present invention;
FIG. 2 is a structure diagram of a page construction module in FIG.1;
FIG. 3 is a flow chart after receiving a menu data packet in an embodiment of the present invention;
FIG. 4 is a flow chart after receiving selection information input by the user in an embodiment of the present invention.

### Preferred Embodiments of the Invention

The present invention is further described in detail by combining with the accompanying drawings through the embodiments hereinafter.

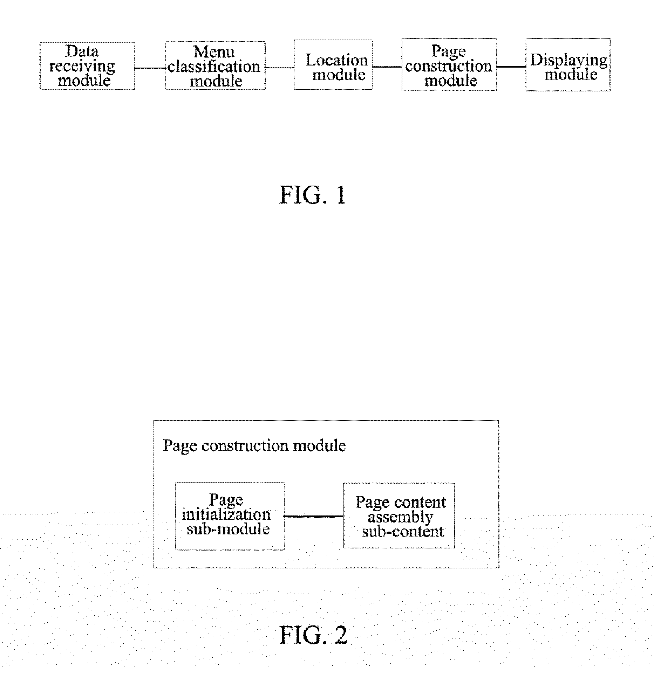

Please referring to FIG. 1, the figure shows a structure diagram of a terminal in the present embodiment, and the terminal in the present embodiment can refer to various intellectual mobile terminals (including the mobile phone, the plat computer, etc.). The terminal includes: a data receiving module, a menu classification module, a location module, a page construction module and a displaying module; wherein,
the data receiving module is configured to receive a menu data packet, and especially, receive the menu data packet containing a menu of at least one level returned from the content service provider, etc., wherein, the menu data packet includes attribute information of each menu; in the present embodiment, the attribute information of the menu can include at least one of the parameters, such as, the menu subsidiary parameter, the menu type, the menu name, the content of the menu, etc., which can be selected and set according to the actual conditions specifically;
the menu classification module is configured to: obtain a relationship list among menus of all levels according to the attribute information of each menu contained in the menu data packet; which can locate a previous-level menu of every menu according to the menu subsidiary parameter of every menu specifically, and locating in recursion from this, and the relationship list among the menus of all levels can be obtained; certainly, in other embodiments of the present invention, it can also only obtain the relationship list among the menus of the appointed level, for example, it can only obtain the relationship list among the menus of the level at which the current main menu is situated and the level at which the sub-menu corresponding to the main menu is situated; and then when the user selects the menu of other levels, it is to relocate to obtain the relationship list among the menus of other levels and the corresponding sub-menus;
the location module is configured to: locate the menu of the corresponding level according to the relationship list; here the menu of the corresponding level can be the menu of the level appointed by the user, and also can be the menu of the system default level; for example, when the menu data packet is presented to the user for the first time after being processed as above, the system can believe by default that the menu of the corresponding level here can be the menu of the highest level (that is the first level); and then it is located to the menu of the level selected by the user along with the selection operation of the user;
the page construction module is configured to: construct a display page of the menu of the corresponding level located by the location module; there can be a plurality of the display pages constructed in the present embodiment, and the display page list is used to manage the plurality of display pages included; for example, to determine the position relation among all display pages, etc.; certainly, under the situation that constructing one display page can meet the display requirement as well, the present embodiment can also only construct one display page; that it, the number of the display pages constructed in the present embodiment can be flexibly determined according to factors such as the menu quantity and/or the menu content, etc.;
the displaying module is configured to: display the display page constructed by the page construction module and present it to the user, so that the user can perform the corresponding operations.

Obviously, the method adopted by the terminal when managing its user interface in the present embodiment has a clear structure and a definite function, and is more convenient for the user operation compared with the existing terminal, thus greatly improving satisfaction of the user experience.

Preferably, please refer to FIG. 2, and the page construction module in the present embodiment can further include a page initialization sub-module and a page content assembly sub-module, wherein,
the page initialization sub-module is configured to: according to the attribute information of all menus of the corresponding level, obtain a display page list of the menu of that level wherein, the display page list comprises initialization information of the display page; and
the page content assembly sub-module is configured to: assemble the content of a current display page according to the initialization information.

Especially, the attribute message includes the content of the menu; the page initialization sub-module determines the number of the menus of every display page according to the content of every menu; and determines a display page where every menu is situated and an interior label of every menu in the relationship list, and determines the page-turning information on the current display page according to a position of the current display page on the display page list (that is, the relationship list); when the number of the menus of that level is greater than the maximum number of the menus that one display page can contain, then it needs to construct a plurality of display pages; and when the number of the menus of that level is not greater than the maximum number of the menus that one display page can contain, then it can only construct one display page; certainly in this case it can also select to construct a plurality of display interfaces. Here it is determined that the interior label of every menu of that level in the relationship list is easy to locate the position of the menu selected by the user in the relationship list; and the interior label can be a number, etc. It should be noted that the interior labels of all menus of the same level should be different. According to the position of the current display page in the display page list here, when determining the page-turning information on the current display page, if the position of the current display page in the display page list is at the home page, then the page-turning information is determined as "next page"; if the position of the current display page in the display page list is at the end page, then the page-turning information is determined as "previous page"; when the position of the current display page in the display page list is between the home page and the end page, then the determined page-turning information is the "previous page" and the "next page".

Correspondingly, the page content assembly sub-module is configured to assemble a content of the current display page according to the obtained initialization information, including: assembling the content of every menu and the number of the menus contained in the current display page according to the initialization information; and determining the page-turning content of the current display page according to the page-turning information; and further assembling the title part for the display page of that level; wherein, determining the page-turning content of the current display page according to the page-turning information specifically is: if the determined page-turning information is the "next page", then the assembled page-turning content is the "next page"; if the determined page-turning information is the "previous page", then the assembled page-turning content is the "previous page"; if the determined page-turning information is the "next page" and the "previous page", then the assembled page-turning content is the "next page" and the "previous page", which can be realized through the corresponding page-turning function when turning the page. In the present embodiment, the title assembled at the display page can only be displayed at the corresponding position on the display page of the home page of the display page list, and can also be displayed on all display pages contained in the display page list, which can be set according to the actual condition specifically. It should be noted that, in the present embodiment, when the display page in the display page list is displayed to the user for the first time, what is assembled is the content of the home page of the display page in the display page list.

In the present embodiment, the displaying module can further include an output conversion sub-module, configured to: convert the interior label and the page-turning content of every menu in the display page into the form selected by the user to display in the current display page. For example, the interior label and the page-turning content of every menu are converted to an exterior serial number that can be identified and selected by the user, corresponding to the corresponding button on the terminal (the button can be a physical button, and also can be a soft button that is virtualized from the software); and the user only needs to select the corresponding button and then can perform the page-turning operation or the operation of selecting a certain menu function on the display page. Correspondingly, the terminal in the present embodiment further can include an information collection module and a display page location module; wherein,
the information collection module is configured to: obtain selection information input by the user; the selection information can be the page-turning information, and also can be the interface interior label corresponding to a certain menu on the current display page;
the location module is further configured to: when the selection information input by the user is an interior label of a certain menu on the corresponding display page, locate a next-level menu of the menu corresponding to the interior label according to the relationship list; the process includes a process of converting the exterior label selected by the user to the corresponding interior label, and the corresponding relation of the two is already illustrated above and will no longer go into details here;
the display page location module is configured to: when the selection information input by the user is the page-turning information, switch to the display page selected by the user according to the display page list, and call the page content assembly sub-module to assemble the content of the display page, and then display through the displaying module.

The terminal in the embodiment of the present invention can further include a detection module, configured to: detect the menu data packet received by the data receiving module, judge validity of the menu data packet, and notify the menu classification module to obtain the relationship list among the menus of all levels according to the attribute information of each menu contained in the data packet when a detection result is valid. If the detection result is invalid, then the menu data packet error is prompted, and it can further provide the suggestion of sending the data packet again. When the menu data packet is detected, the attribute information (that is, the type, the name, the menu subsidiary parameter of the menu, etc.) included in the menu data packet, in order to judge its completeness; if the attribute information of each menu is complete, then it is believed as valid; otherwise, it is believed as invalid. The configuration of the detection module can guarantee the reliability of the menu management, avoid generating wrong menu information from the invalid menu data packet for the user to select and operate, and can further improve the satisfaction of the user experience.

For better understanding the present invention, the present invention is further illustrated by combining with the specific method procedure hereinafter.

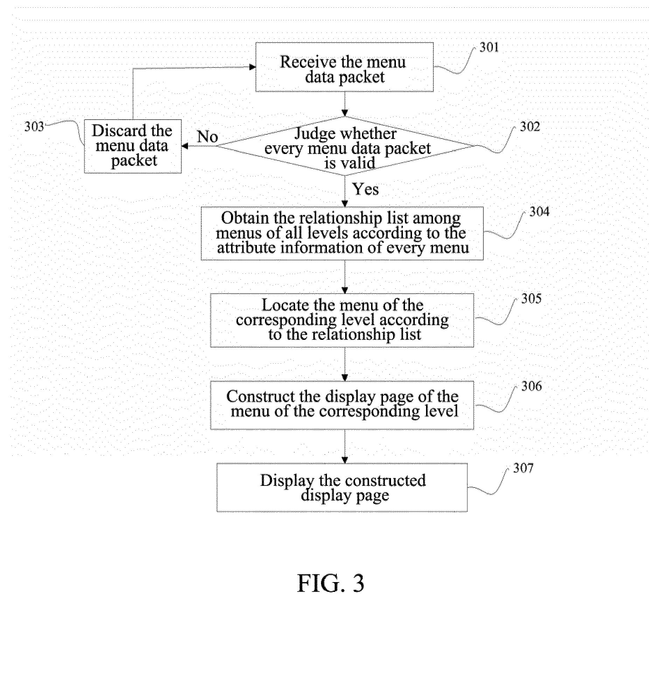

Please referring to FIG. 3, it shows the processing procedure after receiving the menu data packet fed back by the content service provider, including the following steps.

In step 301, the menu data packet is received, and the menu data packet includes the attribute information of each menu, and the attribute information of the menu can include at least one of the parameters, such as, the menu subsidiary parameter, the menu type, the menu name, the content of the menu, etc.

In step 302, the validity of each menu data packet is detected, that is, it is to detect the attribute information of each menu data packet, and it is judged whether the menu data packet is valid; if not, then it is to proceed to step 303; otherwise, it is to proceed to step 304.

In step 303, the menu data packet is discarded, and it can further provide an error prompt information for discarding the menu data packet; it is to proceed to step 301.

In step 304, the relationship list among the menus of all levels is obtained according to attribute information of each menu, specifically including:
locating a previous-level menu of every menu according to the subsidiary parameter of every menu, to obtain the relationship list among the menus of all levels.

In step 305, the menu of the corresponding level is located according to the relationship list, and here the menu of the corresponding level can be a menu of the level appointed by the user, and also can be the menu of the system default level.

In step 306, the display page of the menu of the corresponding level is constructed, specifically including:
a page initialization: obtaining the display page list according to the attribute information of all menus of the corresponding level, wherein, the display page list includes the initialization information of the display page; obtaining the initialization information of the display page contained in the display page list according to the attribute information of the menu includes: determining the number of the menus of the every display page according to the content of every menu; and determining the display page where every menu is situated and the interior label of every menu in the relationship list; and determining the page-turning information on the current display page according to the position of the current display page in the display page list;
the page content assembly: assembling the content of the current display page according to the above-mentioned obtained initialization information, specifically including: assembling the number of the menus contained in the current display page, the content of every menu, and the title part of the display page, etc., according to the initialization information.

In step 307, the constructed display page is displayed, specifically including:
processing the interior label of every menu on the current display page, and processing the interior label of every menu in the relationship list as an exterior label which can be identified and selected by the user; and converting the page-turning content on the current display page into the form which can be selected and identified by the user; and then displaying the title part, the menu content, the page-turning content, etc., on the current display page.

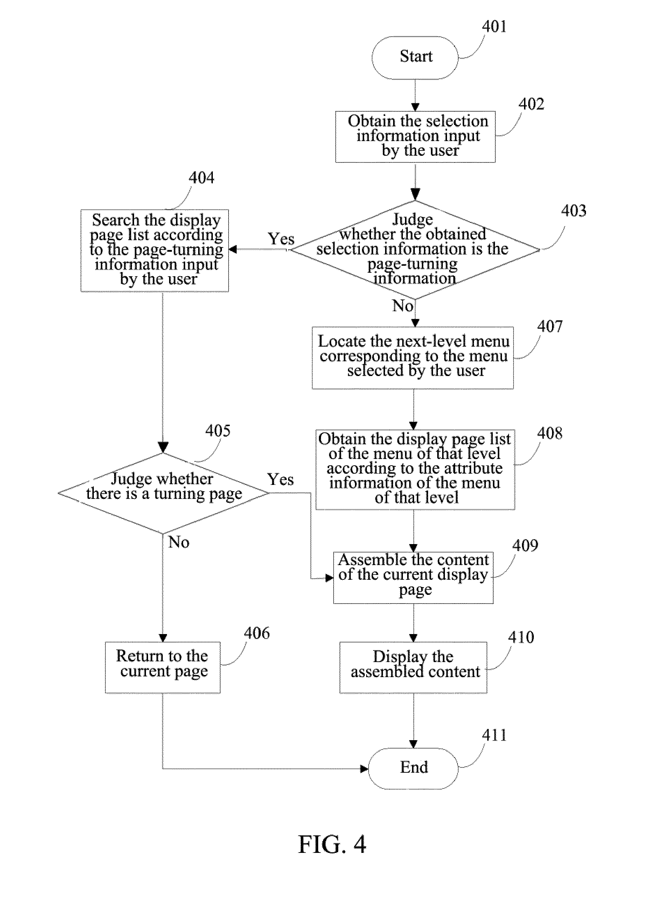

Please referring to FIG. 4, it is the processing procedure after receiving the selection input of the user, and the details are as follows.

In step 401, the procedure is started.

In step 402, the selection information input by the user is obtained.

In step 403, it is judged whether the obtained selection information is the page-turning information; if yes, it is to proceed to step 404; otherwise, it is the interior label on a certain menu of the corresponding display page, then it is to proceed to step 407.

In step 404, the display page list is searched according to the page-turning information input by the user; it should be noted that, when the current display page is the home page in the display page list and the user inputs the "previous page" option, it still returns to the current page at this moment, that is, there is no turning page at this moment; correspondingly, when the current display page is the end page in the display page list and the user inputs an option of "next page", it still returns to the current page at this moment, that is, there is no turning page either at this moment.

In step 405, it is judged whether there is a turning page; if yes, it is to proceed to step 409; otherwise, it is to proceed to step 406.

In step 406, it is to return to the current page, and it is to proceed to step 411.

In step 407, the next-level menu corresponding to the menu selected by the user is located; and the relationship list of the menu of that level and its next-level menu is further obtained.

In step 408, the display page list of the menu of that level is obtained according to the attribute information of the menu of that level, and that list includes the initialization information of the display page.

In step 409, the content of the current display page is assembled, including assembling the title part of the page, the menu content of the page, and the page-turning prompt content.

In step 410, the assembled content is displayed.

In step 411, the procedure is ended.

Obviously, the user interface management method provided in the present invention has a clear structure and a definite function, and is more convenient and concise compared with the existing user interface management method, thus greatly improving satisfaction of the user experience, and being more beneficial for the popularization of the relevant service.

The above description is the detailed explanation for the embodiment of the present invention in combination with the specified embodiments, while the embodiment of the present invention can not be designated as only being limited to these explanations. For those skilled in the art to which the present invention belongs, several simple deductions or replacements can also be made without departing from the conception of the embodiment of the present invention, and all the deductions or replacements should be regarded to be embodied in the protection scope of the accompanying claims.

### Industrial Applicability

With the terminal user interface management method and the terminal provided by the present invention, after a menu data packet is received, according to attribute information of each menu included in the menu data packet, it is to obtain a relationship list among menus of all levels; and then according to the relationship list, locate a menu of a corresponding level; and then construct a display page of the menu of the corresponding level and display the display page to a user. Obviously, the user interface management method provided in the present invention has a clear structure and a definite function, and is more convenient and concise compared with the existing user interface management method, thus greatly improving satisfaction of the user experience.

## Claims

1. A terminal user interface management method, comprising:
receiving a menu data packet, wherein, the menu data packet comprises attribute information of each menu;
obtaining a relationship list among menus of all levels according to the attribute information of each menu;
locating a menu of a corresponding level according to the relationship list;
constructing a display page of the menu of the corresponding level; and
displaying the constructed display page.

2. The terminal user interface management method according to claim 1, wherein, the attribute information includes a menu subsidiary parameter;
obtaining the relationship list among menus of all levels according to the attribute information of each menu comprises:
locating a previous-level menu of every menu according to the subsidiary parameter of every menu, and obtaining the relationship list among the menus of all levels.

3. The terminal user interface management method according to claim 1, wherein, constructing the display page of the menu of the corresponding level comprises:
obtaining a display page list according to the attribute information of all menus of the corresponding level, wherein, the display page list comprises initialization information of the display page; and
assembling a content of a current display page according to the initialization information.

4. The terminal user interface management method according to claim 3, wherein, the attribute message comprises a content of the menu; obtaining the initialization information contained in the display page list according to the attribute information comprises: determining a number of the menus of every display page according to the content of every menu; and determining a display page where every menu is situated and an interior label of every menu in the relationship list; and
assembling the content of the current display page according to the obtained initialization information comprises: assembling a number of the menus contained in the current display page and the content of every menu according to the initialization information.

5. The terminal user interface management method according to claim 4, wherein, obtaining the initialization information contained in the display page list according to the obtained attribute information further comprises: according to a position of the current display page in the display page list, determining page-turning information on the current display page; and
assembling the content of the current display page according to the obtained initialization information further comprises: determining a page-turning content of the current display page according to the page-turning information.

6. The terminal user interface management method according to claim 5, wherein, displaying the constructed display page comprises:
converting the page-turning content and the interior label of every menu in the display page into a form selected by a user and displaying in the current display page.

7. The terminal user interface management method according to claim 6, wherein, after displaying the constructed display page, the method further comprises:
obtaining selection information input by the user;
if the selection information input by the user is an interior label of a certain menu on a corresponding display page, locating a next-level menu of the menu corresponding to the interior label according to the relationship list, and constructing a display page of the next-level menu; and
if the selection information input by the user is the page-turning information, then switching to the display page selected by the user according to the display page list, and assembling and displaying the content of the display page.

8. The terminal user interface management method according to any one of claims 1-6, wherein, after receiving the menu data packet and before obtaining the relationship list among the menus of all levels according to the attribute information of each menu, the method further comprises: detecting validity of the received menu data packet; if a detection result is valid, then obtaining the relationship list among the menus of all levels according to the attribute information of each menu.

9. A terminal, comprising:
a data receiving module, configured to receive a menu data packet, wherein, the menu data packet comprises attribute information of each menu;
a menu classification module, configured to: obtain a relationship list among menus of all levels according to the attribute information of each menu contained in the menu data packet;
a location module, configured to: locate a menu of a corresponding level according to the relationship list;
a page construction module, configured to: construct a display page of the menu of the corresponding level located by the location module; and
a displaying module, configured to: display the display page constructed by the page construction module.

10. The terminal according to claim 9, wherein:
the page construction module comprises a page initialization sub-module and a page content assembly sub-module,
the page initialization sub-module is configured to: obtain a display page list according to the attribute information of all menus of the corresponding level, wherein, the display page list comprises initialization information of the display page; and
the page content assembly sub-module is configured to: assemble a content of a current display page according to the initialization information.

11. The terminal according to claim 9, wherein, the attribute message comprises a content of the menu;
the page initialization sub-module is specifically configured to: determine a number of the menus of every display page according to the content of every menu; and determine a display page where every menu is situated and an interior label of every menu in the relationship list; and determine page-turning information on the current display page according to a position of the current display page on the display page list; and
the page content assembly sub-module is specifically configured to: assemble a number of the menus contained in the current display page and the content of every menu according to the initialization information; and determine a page-turning content of the current display page according to the page-turning information.

12. The terminal according to claim 11, wherein, the displaying module comprises an output conversion sub-module, configured to: convert the page-turning content and the interior label of every menu in the display page into a form selected by a user and display in the current display page.

13. The terminal according to claim 12, further comprising an information collection module and a display page location module; wherein,
the information collection module is configured to: obtain selection information input by the user;
the location module is further configured to: when the selection information input by the user is an interior label of a certain menu on a corresponding display page, locate a next-level menu of the menu corresponding to the interior label according to the relationship list; and
the display page location module is configured to: when the selection information input by the user is the page-turning information, switch to the display page selected by the user according to the display page list, and call the page content assembly sub-module to assemble the content of the display page.

14. The terminal according to any one of claims 9-13, wherein the terminal further comprises a detection module, configured to: detect the menu data packet received by the data receiving module, judge validity of the menu data packet, and notify the menu classification module to obtain the relationship list among the menus of all levels according to the attribute information of each menu contained in the data packet when a detection result is valid.
